# EUROPEAN PATENT SPECIFICATION

(11) **EP 3 992 930 B1**
(45) Date of publication and mention of the grant of the patent: **15.05.2024**
(21) Application number: 22161113.0
(22) Date of filing: 09.03.2022
(51) Int. Cl.: G07C 5/08, G01M 17/00

(54) **METHOD AND APPARATUS FOR CONTROLLING DATA COLLECTION, STORAGE MEDIUM, AND COMPUTER PROGRAM PRODUCT**
VERFAHREN UND VORRICHTUNG ZUR STEUERUNG DER DATENERFASSUNG, SPEICHERMEDIUM UND COMPUTERPROGRAMMPRODUKT
PROCÉDÉ ET APPAREIL POUR CONTRÔLER LA COLLECTE DE DONNÉES, SUPPORT DE STOCKAGE ET PRODUIT DE PROGRAMME INFORMATIQUE

(30) Priority: 26.03.2021 CN 202110325806
(43) Date of publication of application: 04.05.2022
(73) Proprietor: BEIJING BAIDU NETCOM SCIENCE TECHNOLOGY CO., LTD., Beijing 100085 (CN)
(72) Inventor: HU, Kuang, BEIJING, 100085 (CN); WANG, Xitong, BEIJING, 100085 (CN); ZHOU, Jie, BEIJING, 100085 (CN); CHANG, Songhong, BEIJING, 100085 (CN); MA, Chao, BEIJING, 100085 (CN); LI, Jin, BEIJING, 100085 (CN); WEI, Xiao, BEIJING, 100085 (CN)
(74) Representative: Laqua, Bernd Christian Kurt

(56) References cited:
- US-A1- 2017 352 261
- US-A1- 2019 187 723
- US-A1- 2020 109 954
- US-A1- 2020 172 115

## Description

### TECHNICAL FIELD

The present disclosure relates to the technical field of vehicles, particularly relates to the technical field of automatic driving and vehicle detection, and specifically relates to a method and apparatus for controlling data collection, a storage medium, and a computer program product.

### BACKGROUND

Automatic driving technology can involve many aspects such as environment perception, behavior decision making, path planning, and motion control. Relying on the collaboration of artificial intelligence, visual computing, radar, a monitoring apparatus, and a global positioning system, automatic driving vehicles can run automatically and safely without driver's active operation.

Before being put into use, an automatic driving vehicle needs to go through a series of production processes to ensure the safety and reliability of the vehicle. In related technologies, the automatic driving vehicle needs to be tested in a professional test site by professional operators, and the investment cost is relatively high.

US 2020/109954 A1 provides a method of map generation which includes receiving data from a plurality of vehicles about environments within which the plurality of vehicles operate, and generating a three-dimensional map using the data from the plurality of vehicles. The data is collected by one or more sensors on-board the plurality of vehicles.

US 2019/187723 A1 provides a system for building a vehicle-to-cloud real-time traffic map for autonomous driving vehicles (ADVs). The system monitors states of an ADV using a number of sensors mounted on the ADV. The system perceives a driving environment surrounding the ADV using at least a portion of the sensors. The system analyzes the states in view of the driving environment to determine a real-time traffic condition at a point in time. The system determines whether the real-time traffic condition of the driving environment matches at least a predetermined traffic condition. The system transmits data concerning the real-time traffic condition to a remote server over a network to allow the remote server to generate an updated map having real-time traffic information, in response to determining the real-time traffic condition is unknown. In response to receiving the updated map, the system plans and controls the ADV based on the updated map.

US 2017/352261 A1 provides a remote vehicle data collection system which includes a center. The center prescribes, to a subject vehicle, a collection condition for vehicle data through wireless communication. An instruction executing section reads in and executes an instruction described as the collection condition. A determination section determines whether environment information prescribed by the collection condition agrees with the vehicle environment of the subject vehicle. A communication section delivers, to the center, the vehicle data of a time at which the agreement is established.

### SUMMARY

The present invention is defined in the independent claims. Particular embodiments are set out in the respective dependent claims.

By virtue of the technical solutions of the present disclosure, the dependence on a high-cost professional site, professional devices and professionals can be reduced by automatically detecting the current test environment and collected data, so as to reduce the cost on human and material resources.

It should be understood that the content described in this section is not intended to identify key or important features of the embodiments of the present disclosure, nor is it intended to limit the scope of the present disclosure. Other features of the present disclosure will be easily understood through the following description.

### BRIEF DESCRIPTION OF THE DRAWINGS

The accompanying drawings exemplarily illustrate the embodiments and constitute one part of the description, and are intended to explain exemplary implementations of the embodiments together with text descriptions of the description. The embodiments shown are for the purpose of illustration only, and are not intended to limit the scope of claims. In all the drawings, identical reference signs refer to similar but not identical elements.
Fig. 1 illustrates a schematic diagram of an exemplary system, in which various methods described herein can be implemented, according to the embodiments of the present disclosure;
Fig. 2 illustrates a flowchart of a method for controlling data collection according to the embodiments of the present disclosure;
Fig. 3 illustrates a schematic diagram of an environment collection and configuration generation system according to the embodiments of the present disclosure;
Fig. 4 illustrates a schematic flowchart of an environment collection and configuration generation method according to the embodiments of the present disclosure;
Fig. 5 illustrates a structural block diagram of an apparatus for controlling data collection according to the embodiments of the present disclosure; and
Fig. 6 illustrates a structural block diagram of an electronic device of an exemplary server and a client that can be used for realizing the embodiments of the present disclosure.

### DETAILED DESCRIPTION OF EMBODIMENTS

In the present disclosure, unless otherwise specified, use of terms "first", "second", etc. to describe various elements is not intended to limit the positional relationship, timing relationship, or importance relationship of these elements. Such terms are only used for distinguishing one element from another. In some examples, a first element and a second element may refer to the same instance of the element, and in some cases, they may also refer to different instances based on the description of the context.

The terms used in the description of the various examples in the present disclosure are for the purpose of describing specific examples only, and are not intended for limitation. Unless the context clearly indicates otherwise, if the number of elements is not specifically limited, there may be one or more elements. In addition, the term "and/or" used in the present disclosure covers any one of the listed items and all possible combinations.

Before being put into use, an automatic driving vehicle needs to go through a series of production processes. Generally, in order to complete a series of production processes for the automatic driving vehicle, it is required to establish a professional calibration room and professional collection vehicles for related work. This method provides higher production efficiency for large-scale production. However, this method also requires high-cost professional devices and relatively professional technical personnel that small companies in the initial stage of automatic driving/or development teams for scientific research and teaching purposes cannot afford.

Hence, the present disclosure provides a method for controlling data collection, the dependence on a high-cost professional site, professional devices and professionals can be reduced by automatically analyzing and determining a current test environment and collected data, so as to reduce the cost on human and material resources. The embodiments of the present disclosure is described in detail below in conjunction with the accompanying drawings.

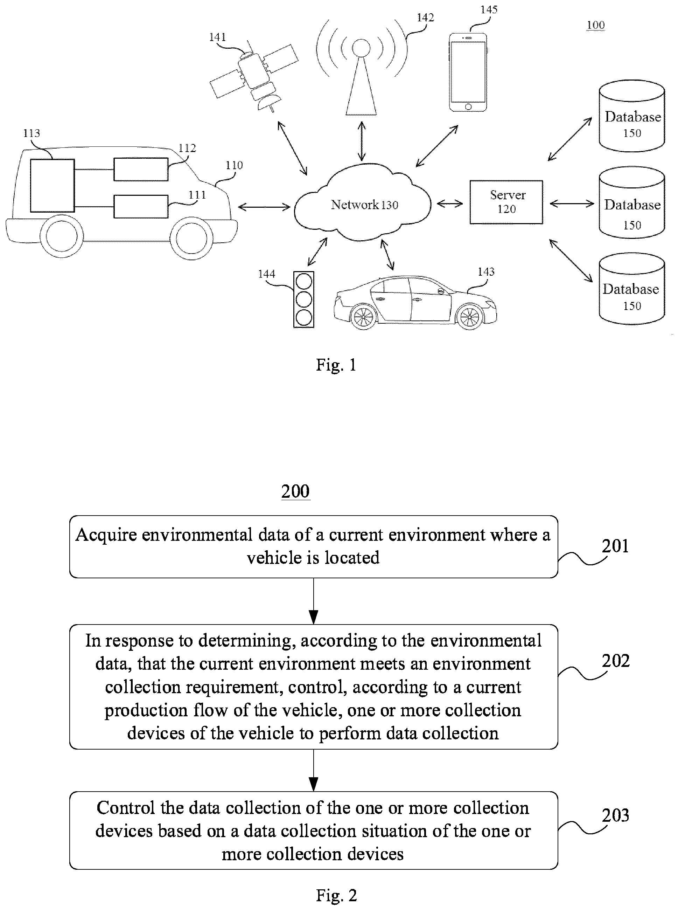

Fig. 1 illustrates a schematic diagram of an exemplary system 100, in which various methods and apparatuses described herein can be implemented, according to the embodiments of the present disclosure. Referring to Fig. 1, the system 100 includes a motor vehicle 110, a server 120, and one or more communication networks 130 for connecting the motor vehicle 110 to the server 120.

In some embodiments, the server 120 may also provide other services or software applications that may include non-virtual environments and virtual environments. In the configuration shown in Fig. 1, the server 120 may include one or more components that realize a function executed by the server 120. These components may include a software component, a hardware component, or a combination thereof executed by one or more processors. A user of the motor vehicle 110 can use one or more client application programs in sequence to interact with the server 120 to use services supplied by these components. It should be understood that various different system configurations are possible, and may be different from the system 100. Therefore, Fig. 1 is one example of a system used for implementing various methods described herein, and is not intended for limitation.

The server 120 may include one or more general-purpose computers, dedicated server computers (for example, personal computers (PC) servers, UNIX servers, and mid-range servers), blade servers, mainframe computers, server clusters, or any other suitable arrangement and/or combination. The server 120 may include one or more virtual machines running a virtual operating system, or other computing architectures involving virtualization (for example, one or more flexible pools of logical storage devices that may be virtualized to maintain virtual storage devices of a server). In various embodiments, the server 120 may run one or more services or software applications that provide the functions described below.

A computing unit in the server 120 may run one or more operating systems including any of the above-mentioned operating systems and any commercially available server operating systems. The server 120 may also run any one of various additional server application programs and/or middle-tier application programs, including an HTTP server, an FTP server, a CGI server, a JAVA server, a database server, etc.

In some implementation modes, the server 120 may include one or more application programs to analyze and merge data feedbacks and/or event updates received from the motor vehicle 110. The server 120 may also include one or more application programs to display data feedbacks and/or real-time events via one or more display devices of the motor vehicle 110.

In some implementation modes, the server 120 can be a server of a distributed system or a server combined with a blockchain. The server 120 can also be a cloud server, or a smart cloud computing server or smart cloud host with an artificial intelligence technology. A cloud server is a host product in the cloud computing service system to overcome the shortcomings of difficult management and weak business scalability in traditional physical host and virtual private server (VPS) services.

The network 130 may be any type of network well known to those skilled in the art, and may use any one of a variety of available protocols (including but not limited to TCP/IP, SNA, IPX, etc.) to support data communication. As an example only, the one or more networks 130 may be a local area network (LAN), an Ethernet-based network, a token ring, a wide area network (WAN), an Internet, a virtual network, a virtual private network (VPN), an intranet, an extranet, a public switched telephone network (PSTN), an infrared network, a wireless network (such as Bluetooth, WIFI) and/or any combination of these networks and/or other networks.

The system 100 may also include one or more databases 150. In some embodiments, these databases can be used to store data and other information. For example, one or more of the databases 150 may be used to store information such as audio files and video files. The databases 150 may reside in various positions. For example, a database used by the server 120 may be local to the server 120, or may be away from the server 120 and may be in communication with the server 120 via a network-based or dedicated connection. The databases 150 may be of different types. In some embodiments, the databases used by the server 120 may be relational databases. One or more of these databases can store, update, and retrieve data to and from the databases in response to a command.

In some embodiments, one or more of the databases 150 may also be used by application programs to store application program data. The databases used by the application programs can be different types of databases, such as a key-value repository, an object repository, or a regular repository supported by a file system.

The motor vehicle 110 may include a sensor 111 used to sense a surrounding environment. The sensor 111 may include one or more of the following sensors: a vision camera, an infrared camera, an ultrasonic sensor, a millimeter wave radar, and a laser radar (LiDAR). Different sensors can provide different detection accuracies and ranges. The camera can be installed in the front, rear or other positions of the vehicle. The vision camera can capture the situations inside and outside the vehicle in real time and present them to the driver and/or passengers. In addition, by analyzing images captured by the vision camera, information such as traffic light indications, intersection conditions, and operating states of other vehicles can be acquired. The infrared camera can capture objects under night vision. The ultrasonic sensor can be installed around the vehicle and used to measure a distance between an object outside the vehicle and the vehicle by using the characteristic of strong directionality of ultrasonic waves. The millimeter wave radar can be installed in the front, rear or other positions of the vehicle and used to measure the distance between the object outside the vehicle and the vehicle by using the characteristics of electromagnetic waves. The LiDAR can be installed in the front, rear or other positions of the vehicle and used to detect edge and shape information of the object for object recognition and tracking. Due to the Doppler effect, a radar device can also measure speed changes of the vehicle and a moving object.

The motor vehicle 110 may also include a communication apparatus 112. The communication apparatus 112 may include a satellite positioning module capable of receiving satellite positioning signals (such as Beidou, GPS, GLONASS, and GALILEO) from a satellite 141 and generating coordinates based on these signals. The communication apparatus 112 may also include a module for communicating with a mobile communication base station 142. The mobile communication network may implement any suitable communication technology, such as GSM/GPRS, CDMA, LTE and other current or evolving wireless communication technologies (such as a 5G technology). The communication apparatus 112 may also have Internet of vehicles or a vehicle-to-everything (V2X) module, configured to implement vehicle-to-outside communication such as vehicle-to-vehicle (V2V) communication with other vehicles 143, and vehicle-to-infrastructure (V2I) communication with an infrastructure 144. In addition, the communication apparatus 112 may also have a module configured to be in communication with a user terminal 145 (including but not limited to a smart phone, a tablet computer, or a wearable apparatus such as a watch) through a wireless local area network or Bluetooth using the IEEE 802.11 standard, for example. By using the communication apparatus 112, the motor vehicle 110 can also access the server 120 via a network 130.

The motor vehicle 110 includes a control apparatus 113. The control apparatus 113 includes a processor that is in communication with various types of computer-readable storage apparatuses or media, such as a central processing unit (CPU) or a graphics processing unit (GPU), or other dedicated processors. The control apparatus 113 may include an automatic driving system used to automatically control various actuators in the vehicle. The automatic driving system is configured to control a powertrain, a steering system, and a brake system of the motor vehicle 110 (not shown) in response to inputs from a plurality of sensors 111 or other input devices via a plurality of actuators to respectively control acceleration, steering and braking without human intervention or limited human intervention. Part of processing functions of the control apparatus 113 can be implemented through cloud computing. For example, an on-board processor can be used to perform certain processing, while computing resources of the cloud can be used to perform other processing. The control apparatus 113 is configured to execute the method according to the present disclosure. In addition, the control apparatus 113 may be implemented as an example of an electronic device on a motor vehicle side (a client side) according to the present disclosure.

The system 100 of Fig. 1 may be configured and operated in various ways to apply various methods and apparatuses described according to the present disclosure.

Fig. 2 illustrates a flowchart of a method 200 for controlling data collection according to the embodiments of the present disclosure. As shown in Fig. 2, the method 200 may include the following steps.

In step 201, environmental data of a current environment where a vehicle is located is acquired.

In step 202, in response to determining, according to the environmental data, that the current environment meets an environment collection requirement, one or more collection devices of the vehicle are controlled, according to a current production flow of the vehicle, to perform data collection.

Exemplarily, the one or more collection devices of the vehicle may correspond to the current production flow of the vehicle. For example, different collection devices of the vehicle are respectively controlled, according to the current production flow of the vehicle, to be turned on, so as to perform the corresponding data collection.

In step 203, data collection of the one or more collection devices is controlled based on a data collection situation of the one or more collection devices.

Therefore, under the condition that the current environment meets the environment collection requirement, the one or more collection devices of the vehicle are controlled, according to the current production flow, to perform the data collection, and the data collection is controlled according to the data collection situation of the one or more collection devices. Therefore, automatic detection of the current test environment and collected data can be realized, the dependence on a high-cost professional site, professional devices and professionals is reduced, so as to reduce the cost on human and material resources.

In some embodiments, the environmental data of the current environment where the vehicle is located may be acquired, and whether the environment collection requirement is currently met is determined according to the environmental data. Under the condition that the environment collection requirement is met, each collection device of the vehicle is then controlled to perform the data collection.

In some examples, the current production flow may include, for example, vehicle calibration, vehicle sensing device calibration, vehicle map collection, etc. Exemplarily, a vehicle sensing device may include, for example, a vision camera, an infrared camera, an ultrasonic sensor, a millimeter wave radar, a LiDAR, etc. The vehicle sensing device calibration may include, for example, LiDAR-inertial measurement unit (LiDAR-IMU) calibration, LiDAR-camera calibration, etc.

Different production flows may have different requirements for a collection environment. In some examples, the current environment may be determined by analyzing point cloud data, positioning data, etc. Exemplarily, for the LiDAR-IMU calibration, the environment collection requirement may include, for example, that a distance between an obstacle around a collection region and the vehicle needs to be within a predetermined range, the obstacle needs to be stationary, the obstacle needs to have edge bulges in a certain ratio, the floor of the collection region needs to be flat, etc. For the LiDAR-camera calibration, the environment collection requirement may include, for example, that an obstacle needs to be stationary, the obstacle needs to have edge bulges in a certain ratio, the floor of the collection region needs to be flat, etc. For the vehicle calibration, the environment collection requirement may include, for example, that the floor of the collection region needs to be flat.

In some embodiments, when determining whether the current environment meets the environment collection requirement, configuration information of the vehicle and the current production flow of the vehicle are also considered in a combined manner. The configuration information of the vehicle may include, for example, a high-definition map, a vehicle calibration table, a sensing device calibration table, vehicle sensing device solution configuration, automatic driving software system parameter configuration, etc. Whether the data collection is performed in the current environment where the vehicle is located (i.e., the environment collection requirement is met) may be determined according to the configuration information of the vehicle, the current production flow (such as the vehicle calibration, the sensing device calibration, and the map collection) and the collected environmental data.

In some embodiments, the collection devices of the vehicle may include, for example, a navigation device (such as an integrated inertial navigation device: a global navigation satellite system (GNSS)+ IMU), a positioning module, a LiDAR device, a camera (such as a vision camera and an infrared camera), and the like. Exemplarily, controlling the collection devices of the vehicle to perform data collection may refer to turning on the collection devices and opening corresponding data channels of the collection devices to perform the data collection.

For different production flows, the collection devices to be turned on are also different. Exemplarily, for the LiDAR-IMU calibration, the following needs to be turned on: the integrated inertial navigation device and its corresponding data channel, the positioning module and its corresponding data channel, the LiDAR device and its corresponding data channel, etc. For the LiDAR-camera calibration, the following needs to be turned on: the integrated inertial navigation device and its corresponding data channel, the positioning module and its corresponding data channel, the LiDAR device and its corresponding data channel, the camera device and its corresponding data channel, etc. For the vehicle calibration, the following needs to be turned on: the integrated inertial navigation device and its corresponding data channel, the positioning module and its corresponding data channel, a vehicle chassis communication module and its corresponding data channel, etc. For the vehicle map collection, the following needs to be turned on: the integrated inertial navigation device and its corresponding data channel, the positioning module and its corresponding data channel, the vehicle chassis communication module and its corresponding data channel, the LiDAR device and its corresponding data channel, the camera device and its corresponding data channel, etc.

According to the claimed invention, controlling the data collection of the collection devices includes, controlling the collection devices to continue to perform or to stop the data collection. When it is determined that the data collection of the one or more collection devices meets a condition, the one or more collection devices is controlled to stop the data collection. The condition includes at least one of a first sub condition or a second sub condition. The first sub condition is that a first collection device in the one or more collection devices does not collect data. The second sub condition is that data collected by a second collection device in the one or more collection devices does not match a data requirement of the second collection device in the current production flow. The first collection device and the second collection device each may be any collection device in the one or more collection devices, and the second collection device may be different from the first collection device.

Therefore, when any collection device of the vehicle does not collect data (for example, no data exists in the data channel of the collection device) or the collected data does not meet the data requirement of the current production flow, all the collection devices of the vehicle are controlled to stop the data collection, so that waste of resources and manpower due to a failure of one collection device or the data collected by one collection device is unavailable can be avoided. In another aspect, the collection and data analysis process are automatic, so that the dependency on the high-cost professional site and the professionals may also be reduced.

In some examples, the data collected by the second collection device does not match the data requirement of the second collection device in the current production flow, which may refer to that, for example, a structure of the data collected by the second collection device is different from a data structure of the data requirement of the second collection device in the current production flow, a field range of the data collected by the second collection device is inconsistent with a data field range of the data requirement of the second collection device in the current production flow, etc.

In some embodiments, for any collection device (such as the first collection device) in the one or more collection devices, when it is determined that controlling the one or more collection devices to stop the data collection is due to the first sub condition (i.e., the first collection device does not collect data), a first collection operation guidance corresponding to the first collection device may be acquired, and the one or more collection devices are controlled, based on the first collection operation guidance, to continue to perform the data collection. Thus, when any collection device fails, the collection device can be subject to operation guidance, so that all the collection devices can normally perform the data collection to improve the efficiency.

In some embodiments, for any collection device (such as the second collection device) in the one or more collection devices, when it is determined that controlling the one or more collection devices to stop the data collection is due to the second sub condition (i.e., the data collected by the second collection device does not match the data requirement of the second collection device in the current production flow), a second collection operation guidance corresponding to the second collection device is acquired, and the one or more collection devices are controlled, based on the second collection operation guidance, to continue to perform the data collection. Thus, when the data collected by any collection device does not meet the requirement, the operation guidance can be performed on the collection device, so that the data collected by all the collection devices meets the requirement, thereby improving the validity of the collected data and the collection efficiency.

In some examples, for different production flows, the corresponding collection operation guidance may also be different. For the LiDAR-IMU calibration, a trajectory and a limit speed that an operator needs to drive may be displayed on a human machine interface (HMI) of the vehicle, and a residual trajectory that needs to be completed is displayed in real time. For the LiDAR-camera calibration, a trajectory and a limit speed that an operator needs to drive and a collection completion progress may be displayed on the HMI.

In some embodiments, under the condition that the data collected by the collection devices meets the requirement, the collected data may also be preprocessed, and the preprocessed data is uploaded to a cloud. In some examples, the preprocessed data may be used to perform service configuration of the vehicle in the cloud. By means of the service configuration in the cloud, separation of a technology from a use operation can be realized, which is conductive to large-scale technology servitization. In some examples, preprocessing the collected data may include performing validity verification and state verification on the collected data.

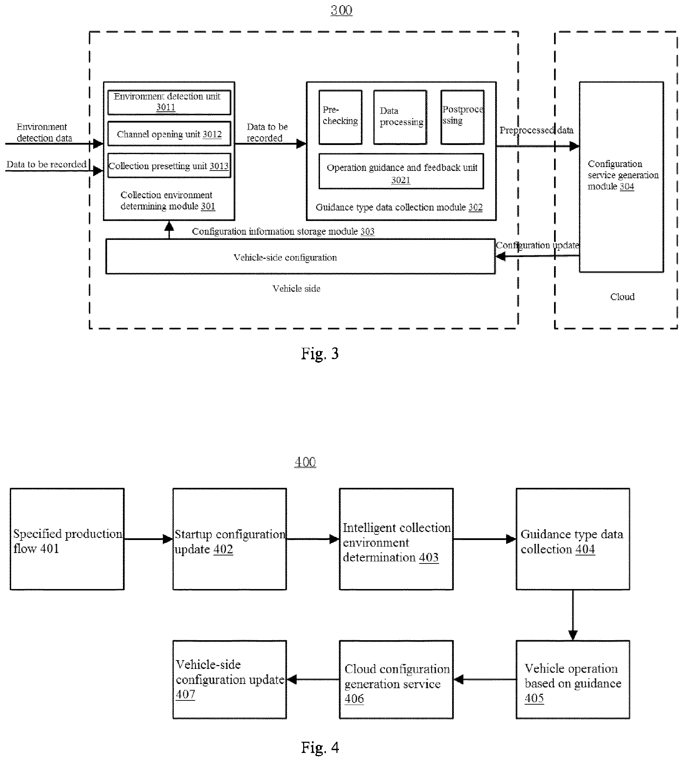

According to some embodiments of the present disclosure, an environment collection and configuration generation system is further provided. Fig. 3 illustrates a schematic diagram of an environment collection and configuration generation system 300 according to the embodiments of the present disclosure. The system 300 is composed of a vehicle-side part and a cloud part. The vehicle-side part includes a collection environment determining module 301, a guidance type data collection module 302, and a configuration information storage module 303. The cloud part includes a configuration service generation module 304.

The collection environment determining module 301 is configured to determine, according to vehicle configuration information, external environment information (such as collected environmental data) and a current production flow (such as vehicle calibration, sensing device calibration and map collection), whether data collection is performed in a current environment. The collection environment determining module 301 includes an environment detection unit 3011, a channel opening unit 3012 and a collection presetting unit 3013.

The environment detection unit 3011 is configured to analyze environment detection data to determine whether the current environment meets a collection need.

The channel opening unit 3012 is configured to open a corresponding data channel to be recorded according to the current production flow and ensures that channel data is normal (for example, whether the channel has data, and whether a data structure and a data field range meet expectations). For example, for the LiDAR-IMU calibration, an integrated inertial navigation device and its corresponding data channel, a positioning module and its corresponding data channel, a LiDAR device and its corresponding data channel, etc. are turned on.

The collection presetting unit 3013 is configured to pre-determine a collector configuration parameter to be invoked according to the vehicle configuration information. For example, under the condition that the configuration information storage module 303 stores a sensing device solution configuration, a parameter table format needing to be calibrated may be determined based on the sensing device solution configuration during sensing device calibration.

The guidance type data collection module 302 is configured to perform pre-checking, data processing, post-checking, etc. on data to be recorded. The guidance type data collection module 302 includes an operation guidance and feedback unit 3021.

The pre-check flow includes performing pre-checking on a data channel to be recorded required by the current production flow (for example, whether the channel has data, and whether a data structure and a data field range meet expectations). When the data is normal, data collection is continued to be performed; and when the data is abnormal, a prompt is displayed on the HMI, and the data collection is stopped. The data processing flow includes preprocessing the recorded data to extract data to be used by the cloud. The postprocessing flow includes performing validity verification and state verification on the processed data obtained by the data processing flow.

The operation guidance and feedback unit 3021 is configured to guide, based on feedbacks of the pre-checking and postprocessing flows, an operator to operate the vehicle in real time to complete the data collection.

The configuration service generation module 304 is configured to read the preprocessed data to complete the configuration generation.

Thus, the dependency on references in a collection process can be reduced by means of environment detection, channel opening, collection presetting, etc. By means of the guidance type data collection, the validity of the collected data and the collection efficiency can be improved.

Fig. 4 illustrates a schematic flowchart of an environment collection and configuration generation method 400 according to the embodiments of the present disclosure. As shown in Fig. 4, the method 400 may include the following flows: a specified production flow (step 401), startup configuration update information (step 402), intelligent collection environment determination (step 403), guidance type data collection (step 404), vehicle operation based on guidance (step 405), cloud configuration generation service (step 406), and vehicle-side configuration update (step 407).

The method according to the exemplary embodiments of the present disclosure is described above. Although the various operations are depicted in a specific order in the drawings, this should not be understood as requiring that these operations must be performed in the specific order shown or in an antegrade order, nor should it be understood as requiring that all shown operations must be performed to obtain a desired result.

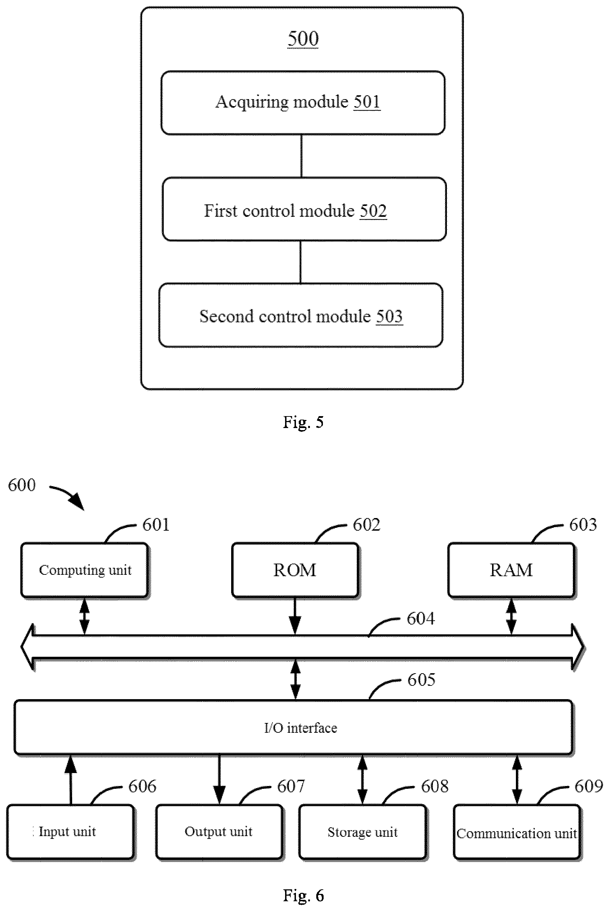

Fig. 5 illustrates a structural block diagram of an apparatus 500 for controlling data collection according to the embodiments of the present disclosure. As shown in Fig. 5, the apparatus 500 includes an acquiring module 501, a first control module 502, and a second control module 503.

The acquiring module 501 is configured to acquire environmental data of a current environment where a vehicle is located.

The first control module 502 is configured to control, according to a current production flow of the vehicle, one or more collection devices of the vehicle to perform data collection in response to determining, according to the environmental data, that the current environment meets an environment collection requirement.

In some embodiments, the one or more collection devices correspond to the current production flow.

The second control module 503 is configured to control the data collection of the one or more collection devices based on the data collection situation of the one or more collection devices.

In some examples, operations of the acquiring module 501, the first control module 502, and the second control module 503 respectively correspond to the steps 201 to 203 of the method 200 described in Fig. 2, so that detailed descriptions thereof are omitted here.

Although specific functions have been discussed above with reference to specific modules, it should be noted that the functions of each module discussed herein may be divided into multiple modules, and/or at least some functions of the multiple modules may be combined into a single module. The specific module performing an action discussed herein includes the specific module itself performing the action, or alternatively the specific module calling or otherwise accessing another component or module that performs the action (or performs the action in combination with the specific module). Therefore, a specific module that performs an action may include the specific module itself that performs the action and/or another module that is called or otherwise accessed by the specific module and performs the action.

Exemplary embodiments of the present disclosure further provide an electronic device, including at least one processor and a memory in communication connection with the at least one processor. The memory stores a computer program that can be executed by the at least one processor. The computer program, when executed by the at least one processor, is configured to cause the electronic device to implement the method according to the embodiments of the present disclosure.

Exemplary embodiments of the present disclosure further provide a non-transient computer-readable storage medium that stores a computer program. The computer program, when executed by a processor of a computer, is configured to cause the computer to implement the method according to the embodiments of the present disclosure.

Exemplary embodiments of the present disclosure further provide a computer program product including a computer program. The computer program, when executed by a processor of a computer, is configured to cause the computer to implement the method according to the embodiments of the present disclosure.

Referring to Fig. 6, a structural block diagram of an electronic device 600 that can be used as a server or client of the present disclosure is described, which is an example of a hardware device that can be applied to various aspects of the present disclosure. The electronic device is intended to represent various forms of digital electronic computer devices, such as a laptop computer, a desktop computer, a workstation, a personal digital assistant, a server, a blade server, a mainframe computer, and other suitable computers. The electronic device may also represent various forms of mobile devices, such as personal digital processing, a cellular phone, a smart phone, a wearable device, and other similar computing devices. The components shown herein, their connections and relationships, and their functions are merely examples, and are not intended to limit the implementation of the present disclosure described and/or required herein.

As shown in Fig. 6, the device 600 includes a computing unit 601, which can execute various appropriate actions and processing according to computer programs that are stored in a read-only memory (ROM) 602 or computer programs loaded from a storage unit 608 into a random access memory (RAM) 603. Various programs and data required for operations of the device 600 are also stored in the RAM 603. The computing unit 601, the ROM 602, and the RAM 603 are connected to each other by means of a bus 604. An input/output (I/O) interface 605 is also connected to the bus 604.

Multiple components in the device 600 are connected to the I/O interface 605, including: an input unit 606, an output unit 607, a storage unit 608, and a communication unit 609. The input unit 606 can be any type of device that can input information to the device 600. The input unit 606 can receive input numeric or character information and generate key signal inputs that are related to user settings and/or function control of the electronic device, and may include, but is not limited to, a mouse, a keyboard, a touch screen, a trackpad, a trackball, a joystick, a microphone, and/or a remote controller. The output unit 607 may be any type of device that can present information, and may include, but is not limited to, a display, a speaker, a video/audio output terminal, a vibrator, and/or a printer. The storage unit 608 may include, but is not limited to, a magnetic disk and an optical disk. The communication unit 609 allows the device 600 to exchange information/data with other devices through a computer network such as the Internet and/or various telecommunication networks, and may include, but is not limited to, a modem, a network card, an infrared communication device, a wireless communication transceiver, and/or a chipset, such as a Bluetooth^{™} device, a 1302.11 device, a Wi-Fi device, a WiMAX device, a cellular communication device and/or analogues.

The computing unit 601 may be various general-purpose and/or special-purpose processing components with processing and computing capabilities. Some examples of the computing unit 601 include, but are not limited to, a central processing unit (CPU), a graphics processing unit (GPU), various dedicated artificial intelligence (AI) computing chips, various computing units that run machine learning model algorithms, a digital signal processing (DSP), and any appropriate processor, controller, microcontroller, etc. The computing unit 601 executes the various methods and processes described above, for example, the method 200. For example, in some embodiments, the method 200 may be implemented as a computer software program, which is tangibly contained in a machine-readable medium, such as the storage unit 608. In some embodiments, part or all of the computer programs may be loaded and/or installed on the device 600 via the ROM 602 and/or the communication unit 609. When the computer program is loaded to the RAM 603 and executed by the computing unit 601, one or more steps of the method 200 described above can be executed. Alternatively, in other embodiments, the computing unit 601 may be configured to execute the method 200 in any other suitable manner (for example, by means of firmware).

Various implementation modes of the systems and technologies described herein can be implemented in a digital electronic circuit system, an integrated circuit system, a field programmable gate array (FPGA), an application specific integrated circuit (ASIC), an application-specific standard product (ASSP), a system-on-chip (SOC), a complex programmable logic device (CPLD), computer hardware, firmware, software, and/or their combination. These various implementation modes may include: being implemented in one or more computer programs. The one or more computer programs may be executed and/or interpreted on a programmable system including at least one programmable processor. The programmable processor may be a dedicated or general-purpose programmable processor that can receive data and instructions from the storage system, at least one input device, and at least one output device, and transmit the data and instructions to the storage system, the at least one input device, and the at least one output device.

Program codes used to implement the method of the present disclosure can be written in any combination of one or more programming languages. These program codes can be provided to processors or controllers of general-purpose computers, special-purpose computers, or other programmable data processing apparatuses, so that when the program codes are executed by the processors or controllers, the functions/operations specified in the flowcharts and/or block diagrams are implemented. The program codes can be entirely or partly executed on a machine, partly executed on the machine as an independent software package, and partly executed on a remote machine, or entirely executed on the remote machine or a server.

In the context of the present disclosure, a machine-readable medium may be a tangible medium, which may contain or store a program for use by an instruction execution system, apparatus, or device or in combination with the instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination of the above. More specific examples of the machine-readable storage medium would include an electrical connection based on one or more wires, a portable computer disk, a hard disk, an RAM, an ROM, an erasable programmable read-only memory (EPROM or a flash memory), an optical fiber, a portable compact disk read-only memory (CD-ROM), an optical storage device, a magnetic storage device, or any suitable combination of the above.

In order to provide interaction with users, the systems and techniques described herein can be implemented on a computer that has: a display apparatus for displaying information to the users (for example, a cathode ray tube (CRT) or a liquid crystal display (LCD) monitor); and a keyboard and a pointing apparatus (such as a mouse or a trackball) through which the users can provide inputs to the computer. Other types of devices can also be used to provide interaction with the users. For example, a feedback provided to the users can be any form of sensory feedback (for example, visual feedback, auditory feedback, or tactile feedback), and the inputs from the users can be received in any form (including sound input, speech input, or tactile input).

The systems and technologies described herein can be implemented in a computing system that includes a background component (for example, as a data server), or a computing system that includes a middleware component (for example, an application server), or a computing system that includes a front-end component (for example, a user computer with a graphical user interface or web browser through which the user can interact with the implementation modes of the systems and technologies described herein), or a computing system that includes any combination of the background component, the middleware component, or the front-end component. The components of the system can be connected to each other through any form or medium of digital data communication (for example, a communication network). Examples of the communication network include: a local area network (LAN), a wide area network (WAN), and an Internet.

The computer system can include clients and servers. The client and the server are generally far away from each other and usually interact through a communication network. A relationship between the client and the server is generated by computer programs running on corresponding computers and having a client-server relationship with each other.

It should be understood that the various forms of flows shown above can be used to reorder, add or delete steps. For example, the steps described in the present disclosure may be executed in parallel, sequentially or in a different order, as long as the desired results of the technical solutions disclosed in the present disclosure can be achieved, which is not limited herein.

## Claims

1. A computer-implemented method for controlling data collection, wherein the method is performed inside a vehicle, and wherein the vehicle is an automatic driving vehicle, the method comprising:
acquiring (201) environmental data of a current environment where the vehicle is located;
in response to determining, according to the environmental data, that the current environment meets an environment collection requirement, controlling (202), according to a current production flow of the vehicle, one or more collection devices of the vehicle to perform data collection, wherein the one or more collection devices correspond to the current production flow, and wherein the current production flow is a production process that the vehicle needs to go through before being put into use; and
controlling (203) the data collection of the one or more collection devices based on a data collection situation of the one or more collection devices, wherein controlling the data collection of the one or more collection devices based on the data collection situation of the one or more collection devices comprises: in response to determining that the data collection situation of the one or more collection devices meets a condition, controlling the one or more collection devices to stop the data collection,
wherein the condition comprises at least one of:
a first sub condition: a first collection device in the one or more collection devices does not collect data, wherein the first collection device is any collection device in the one or more collection devices; or
a second sub condition: data collected by a second collection device in the one or more collection devices does not match a data requirement of the second collection device in the current production flow, wherein the second collection device is any collection device in the one or more collection devices.

2. The method according to claim 1, further comprising:
in response to determining that controlling the one or more collection devices to stop the data collection is due to the first sub condition, acquiring a first collection operation guidance corresponding to the first collection device; and
controlling, based on the first collection operation guidance, the one or more collection devices to continue to perform the data collection.

3. The method according to claim 1, further comprising:
in response to determining that controlling the one or more collection devices to stop the data collection is due to the second sub condition, acquiring a second collection operation guidance corresponding to the second collection device; and
controlling, based on the second collection operation guidance, the one or more collection devices to continue to perform the data collection.

4. The method according to claim 3, further comprising:
after controlling, based on the second collection operation guidance, the one or more collection devices to continue to perform the data collection, in response to determining that the data collected by the second collection device matches the data requirement of the second collection device in the current production flow, preprocessing the data collected by the one or more collection devices; and
uploading the preprocessed data to a cloud, wherein the preprocessed data is used to perform service configuration of the vehicle in the cloud.

5. The method according to any one of claims 1 to 4, further comprising:
acquiring configuration information of the vehicle; and
determining, according to the configuration information, the current production flow and the environmental data, whether the current environment meets the environment collection requirement.

6. The method according to any one of claims 1 to 5, wherein the current production flow comprises one or more of: vehicle calibration, vehicle sensing device calibration or vehicle map collection.

7. An apparatus for controlling data collection, wherein the apparatus is located in a vehicle, and wherein the vehicle is an automatic driving vehicle, the apparatus comprising:
an acquiring module (501), configured to acquire environmental data of a current environment where the vehicle is located, wherein the acquiring module is located in the vehicle;
a first control module (502), configured to control, according to a current production flow of the vehicle, one or more collection devices of the vehicle to perform data collection in response to determining, according to the environmental data, that the current environment meets an environment collection requirement, wherein the one or more collection devices correspond to the current production flow, and wherein the current production flow is a production process that the vehicle needs to go through before being put into use; and
a second control module (503), configured to control the data collection of the one or more collection devices based on a data collection situation of the one or more collection devices, wherein the second control module is further configured to:
in response to determining that the data collection situation of the one or more collection devices meets a condition, control the one or more collection devices to stop the data collection;
wherein the condition comprises at least one of:
a first sub condition: a first collection device in the one or more collection devices does not collect data, wherein the first collection device is any collection device in the one or more collection devices; or
a second sub condition: data collected by a second collection device in the one or more collection devices does not match a data requirement of the second collection device in the current production flow, wherein the second collection device is any collection device in the one or more collection devices.

8. The apparatus according to claim 7, wherein the second control module is further configured to:
in response to determining that the first collection device in the one or more collection devices does not collect data, acquire a first collection operation guidance corresponding to the first collection device; and
control, based on the first collection operation guidance, the one or more collection devices to continue to perform the data collection.

9. The apparatus according to claim 7, wherein the second control module is further configured to:
in response to determining that the data collected by the second collection device in the one or more collection devices does not match the data requirement of the second collection device in the current production flow, acquire a second collection operation guidance corresponding to the second collection device; and
control, based on the second collection operation guidance, the one or more collection devices to continue to perform the data collection.

10. The apparatus according to claim 9, further comprising:
a processing module, configured to preprocess the data collected by the one or more collection devices in response to determining that the data collected by the second collection device matches the data requirement of the second collection device in the current production flow; and
a transmission module, configured to upload the preprocessed data to a cloud, wherein the preprocessed data is used to perform service configuration of the vehicle in the cloud.

11. The apparatus according to any one of claims 7 to 10, wherein
the acquiring module is further configured to acquire configuration information of the vehicle, and wherein
the first control module is further configured to determine, according to the configuration information, the current production flow and the environmental data, whether the current environment meets the environment collection requirement.

12. A computer-readable storage medium storing a computer program, wherein the computer program, when executed by a processor of a computer, causes the computer to implement the method according to any one of claims 1 to 6.

13. A computer program product, comprising a computer program,
wherein the computer program, when executed by a processor of a computer, causes the computer to implement the method according to any one of claims 1 to 6.

## Patentansprüche

1. Computerimplementiertes Verfahren zur Steuerung einer Datenerfassung, wobei das Verfahren innerhalb eines Fahrzeugs durchgeführt wird, und wobei das Fahrzeug ein automatisch fahrendes Fahrzeug ist, wobei das Verfahren umfasst:
Erfassen (201) von Umgebungsdaten einer aktuellen Umgebung, in der sich das Fahrzeug befindet;
als Reaktion auf eine Bestimmung, gemäß den Umgebungsdaten, dass die aktuelle Umgebung eine Umgebungserfassungsanforderung erfüllt, Steuern (202), gemäß einem aktuellen Produktionsablauf des Fahrzeugs, einer oder mehrerer Erfassungsvorrichtungen des Fahrzeugs, um eine Datenerfassung durchzuführen, wobei die eine oder mehreren Erfassungsvorrichtungen dem aktuellen Produktionsablauf entsprechen, und wobei der aktuelle Produktionsablauf ein Produktionsprozess ist, den das Fahrzeug durchlaufen muss, bevor es in Gebrauch genommen wird; und
Steuern (203) der Datenerfassung der einen oder mehreren Erfassungsvorrichtungen auf der Grundlage einer Datenerfassungssituation der einen oder mehreren Erfassungsvorrichtungen, wobei das Steuern der Datenerfassung der einen oder mehreren Erfassungsvorrichtungen auf der Grundlage der Datenerfassungssituation der einen oder mehreren Erfassungsvorrichtungen umfasst: als Reaktion auf eine Bestimmung, dass die Datenerfassungssituation der einen oder mehreren Erfassungsvorrichtungen eine Bedingung erfüllt, Steuern der einen oder mehreren Erfassungsvorrichtungen, um die Datenerfassung zu stoppen,
wobei die Bedingung mindestens eines umfasst aus:
einer ersten Unterbedingung: eine erste Erfassungsvorrichtung in der einen oder den mehreren Erfassungsvorrichtungen erfasst keine Daten, wobei die erste Erfassungsvorrichtung eine beliebige Erfassungsvorrichtung in der einen oder den mehreren Erfassungsvorrichtungen ist; oder
einer zweiten Unterbedingung: von einer zweiten Erfassungsvorrichtung in der einen oder den mehreren Erfassungsvorrichtungen erfasste Daten stimmen nicht mit einer Datenanforderung der zweiten Erfassungsvorrichtung im aktuellen Produktionsablauf überein, wobei die zweite Erfassungsvorrichtung eine beliebige Erfassungsvorrichtung in der einen oder den mehreren Erfassungsvorrichtungen ist.

2. Verfahren nach Anspruch 1, ferner umfassend:
als Reaktion auf eine Bestimmung, dass die Steuerung der einen oder mehreren Erfassungsvorrichtungen zum Stoppen der Datenerfassung auf die erste Unterbedingung zurückzuführen ist, Erfassen einer ersten Erfassungsbetriebsanweisung, die der ersten Erfassungsvorrichtung entspricht; und
Steuern der einen oder mehreren Erfassungsvorrichtungen auf der Grundlage der ersten Erfassungsbetriebsanweisung, um die Datenerfassung fortzusetzen.

3. Verfahren nach Anspruch 1, ferner umfassend:
als Reaktion auf eine Bestimmung, dass die Steuerung der einen oder mehreren Erfassungsvorrichtungen zum Stoppen der Datenerfassung auf die zweite Unterbedingung zurückzuführen ist, Erfassen einer zweiten Erfassungsbetriebsanweisung, die der zweiten Erfassungsvorrichtung entspricht; und
Steuern der einen oder mehreren Erfassungsvorrichtungen auf der Grundlage der zweiten Erfassungsbetriebsanweisung, um die Datenerfassung fortzusetzen.

4. Verfahren nach Anspruch 3, ferner umfassend:
nach Steuerung der einen oder mehreren Erfassungsvorrichtungen auf der Grundlage der zweiten Erfassungsbetriebsanweisung, um die Datenerfassung fortzusetzen, als Reaktion auf eine Bestimmung, dass die von der zweiten Erfassungsvorrichtung erfassten Daten mit der Datenanforderung der zweiten Erfassungsvorrichtung im aktuellen Produktionsablauf übereinstimmen, Vorverarbeiten der von der einen oder den mehreren Erfassungsvorrichtungen erfassten Daten; und
Hochladen der vorverarbeiteten Daten in eine Cloud, wobei die vorverarbeiteten Daten verwendet werden, um eine Servicekonfiguration des Fahrzeugs in der Cloud durchzuführen.

5. Verfahren nach einem der Ansprüche 1 bis 4, ferner umfassend:
Erfassen von Konfigurationsinformationen des Fahrzeugs; und
Bestimmen, gemäß den Konfigurationsinformationen, des aktuellen Produktionsablaufes und der Umgebungsdaten, ob die aktuelle Umgebung der Umgebungserfassungsanforderung entspricht.

6. Verfahren nach einem der Ansprüche 1 bis 5, wobei der aktuelle Produktionsablauf eines oder mehreres umfasst aus: Kalibrierung des Fahrzeugs, Kalibrierung der Fahrzeugsensorik oder Fahrzeugkartenerfassung.

7. Vorrichtung zur Steuerung einer Datenerfassung, wobei sich die Vorrichtung in einem Fahrzeug befindet, und wobei das Fahrzeug ein automatisch fahrendes Fahrzeug ist, wobei die Vorrichtung umfasst:
ein Erfassungsmodul (501), das zum Erfassen von Umgebungsdaten einer aktuellen Umgebung, in der sich das Fahrzeug befindet, konfiguriert ist, wobei sich das Erfassungsmodul in dem Fahrzeug befindet;
ein erstes Steuermodul (502), das so konfiguriert ist, dass es, gemäß einem aktuellen Produktionsablauf des Fahrzeugs, eine oder mehrere Erfassungsvorrichtungen des Fahrzeugs steuert, um eine Datenerfassung durchzuführen, als Reaktion auf eine Bestimmung, gemäß den Umgebungsdaten, dass die aktuelle Umgebung eine Umgebungserfassungsanforderung erfüllt, wobei die eine oder mehreren Erfassungsvorrichtungen dem aktuellen Produktionsablauf entsprechen, und wobei der aktuelle Produktionsablauf ein Produktionsprozess ist, den das Fahrzeug durchlaufen muss, bevor es in Gebrauch genommen wird; und
ein zweites Steuermodul (503), das so konfiguriert ist, dass es die Datenerfassung der einen oder mehreren Erfassungsvorrichtungen auf der Grundlage einer Datenerfassungssituation der einen oder mehreren Erfassungsvorrichtungen steuert, wobei das zweite Steuermodul ferner so konfiguriert ist, dass es:
als Reaktion auf eine Bestimmung, dass die Datenerfassungssituation der einen oder mehreren Erfassungsvorrichtungen eine Bedingung erfüllt, die eine oder mehreren Erfassungsvorrichtungen so steuert, dass die Datenerfassung gestoppt wird;
wobei die Bedingung mindestens eines umfasst aus:
einer ersten Unterbedingung: eine erste Erfassungsvorrichtung in der einen oder den mehreren Erfassungsvorrichtungen erfasst keine Daten, wobei die erste Erfassungsvorrichtung eine beliebige Erfassungsvorrichtung in der einen oder den mehreren Erfassungsvorrichtungen ist; oder
einer zweiten Unterbedingung: die von einer zweiten Erfassungsvorrichtung in der einen oder den mehreren Erfassungsvorrichtungen erfassten Daten stimmen nicht mit einer Datenanforderung der zweiten Erfassungsvorrichtung im aktuellen Produktionsablauf überein, wobei die zweite Erfassungsvorrichtung eine beliebige Erfassungsvorrichtung in der einen oder den mehreren Erfassungsvorrichtungen ist.

8. Vorrichtung nach Anspruch 7, wobei das zweite Steuermodul ferner so konfiguriert ist, dass es:
als Reaktion auf eine Bestimmung, dass die erste Erfassungsvorrichtung in der einen oder den mehreren Erfassungsvorrichtungen keine Daten sammelt, eine erste Erfassungsbetriebsanweisung erfasst, die der ersten Erfassungsvorrichtung entspricht; und
auf der Grundlage der ersten Erfassungsbetriebsanweisung die eine oder mehreren Erfassungsvorrichtungen so steuert, dass die Datenerfassung fortgesetzt wird.

9. Vorrichtung nach Anspruch 7, wobei das zweite Steuermodul ferner so konfiguriert ist, dass es:
als Reaktion auf eine Bestimmung, dass die von der zweiten Erfassungsvorrichtung in der einen oder den mehreren Erfassungsvorrichtungen erfassten Daten nicht mit der Datenanforderung der zweiten Erfassungsvorrichtung im aktuellen Produktionsablauf übereinstimmen, eine zweite Erfassungsbetriebsanweisung erfasst, die der zweiten Erfassungsvorrichtung entspricht; und
auf der Grundlage der zweiten Erfassungsbetriebsanweisung die eine oder mehreren Erfassungsvorrichtungen so steuert, dass die Datenerfassung fortgesetzt wird.

10. Vorrichtung nach Anspruch 9, ferner umfassend:
ein Verarbeitungsmodul, das so konfiguriert ist, dass es die von der einen oder den mehreren Erfassungsvorrichtungen erfassten Daten als Reaktion auf eine Bestimmung, dass die von der zweiten Erfassungsvorrichtung erfassten Daten mit der Datenanforderung der zweiten Erfassungsvorrichtung im aktuellen Produktionsablauf übereinstimmen, vorverarbeitet; und
ein Übertragungsmodul, das so konfiguriert ist, dass es die vorverarbeiteten Daten in eine Cloud hochlädt, wobei die vorverarbeiteten Daten verwendet werden, um eine Servicekonfiguration des Fahrzeugs in der Cloud durchzuführen.

11. Vorrichtung nach einem der Ansprüche 7 bis 10, wobei
das Erfassungsmodul ferner so konfiguriert ist, dass es Konfigurationsinformationen des Fahrzeugs erfasst, und wobei
das erste Steuermodul ist ferner so konfiguriert, dass es, gemäß den Konfigurationsinformationen, den aktuellen Produktionsablauf und die Umgebungsdaten bestimmt, ob die aktuelle Umgebung die Umgebungserfassungsanforderung erfüllt.

12. Computerlesbares Speichermedium, das ein Computerprogramm speichert, wobei das Computerprogramm, wenn es von einem Prozessor eines Computers ausgeführt wird, den Computer veranlasst, das Verfahren nach einem der Ansprüche 1 bis 6 zu implementieren.

13. Computerprogrammprodukt, umfassend ein Computerprogramm, wobei das Computerprogramm, wenn es von einem Prozessor eines Computers ausgeführt wird, den Computer veranlasst, das Verfahren nach einem der Ansprüche 1 bis 6 durchzuführen.

## Revendications

1. Procédé mis en oeuvre par ordinateur pour commander la collecte de données, le procédé étant exécuté à l'intérieur d'un véhicule, et dans lequel le véhicule est un véhicule autonome, le procédé comprenant :
l'acquisition (201) de données environnementales d'un environnement actuel dans lequel se situe le véhicule ;
en réponse à la détermination, conformément aux données environnementales, que l'environnement actuel remplit une exigence de collecte d'environnement, le fait d'amener (202), conformément à un flux de production actuel du véhicule, d'un ou de plusieurs dispositifs de collecte du véhicule à effectuer la collecte de données, dans lequel le ou les dispositifs de collecte correspondent au flux de production actuel, et dans lequel le flux de production actuel est un processus de production par lequel le véhicule doit passer avant qu'il ne soit mis en service ; et
la commande (203) de la collecte de données d'un ou de plusieurs dispositifs de collecte en fonction d'une situation de collecte de données d'un ou de plusieurs dispositifs de collecte, dans lequel la commande de la collecte de données d'un ou de plusieurs dispositifs de collecte consiste à : en réponse à la détermination que la situation de collecte de données d'un ou de plusieurs dispositifs de collecte remplit une condition, amener un ou plusieurs dispositifs de collecte à arrêter la collecte de données,
dans lequel la condition comprend au moins une condition parmi :
une première sous-condition : un premier dispositif de collecte dans un ou plusieurs dispositifs de collecte ne collecte pas les données, dans lequel le premier dispositif de collecte est un quelconque dispositif de collecte parmi un ou plusieurs dispositifs de collecte ; ou
une seconde sous-condition : les données collectées par un second dispositif de collecte parmi un ou plusieurs dispositifs de collecte ne correspondent pas à une exigence de données du second dispositif de collecte dans le flux de production actuel, dans lequel le second dispositif de collecte est un quelconque dispositif de collecte parmi un ou plusieurs dispositifs de collecte.

2. Procédé selon la revendication 1, comprenant en outre :
en réponse à la détermination que le fait d'amener un ou plusieurs dispositifs de collecte à arrêter la collecte de données est dû à la première sous-condition, l'acquisition d'un premier guidage d'opération de collecte correspondant au premier dispositif de collecte ; et
le fait d'amener, en fonction du premier guidage d'opération de collecte, un ou plusieurs dispositifs de collecte à poursuivre la collecte de données.

3. Procédé selon la revendication 1, comprenant en outre :
en réponse à la détermination que le fait d'amener un ou plusieurs dispositifs de collecte à arrêter la collecte de données est dû à la seconde sous-condition, l'acquisition d'un second guidage d'opération de collecte correspondant au second dispositif de collecte ; et
le fait d'amener, en fonction du second guidage d'opération de collecte, un ou plusieurs dispositifs de collecte à poursuivre la collecte de données.

4. Procédé selon la revendication 3, comprenant en outre :
après que les dispositifs de collecte, sur la base du second guidage d'opération de collecte, ont été amenés à poursuivre la collecte de données, en réponse à la détermination que les données collectées par le second dispositif de collecte correspondent à l'exigence de données du second dispositif de collecte dans le flux de production actuel, le traitement au préalable des données collectées par un ou plusieurs dispositifs de collecte ; et
le téléchargement des données traitées au préalable dans un nuage, dans lequel les données traitées au préalable sont utilisées pour effectuer la configuration de service du véhicule dans le nuage.

5. Procédé selon l'une quelconque des revendications 1 à 4, comprenant en outre :
l'acquisition des informations de configuration du véhicule ; et
la détermination, en fonction des informations de configuration, du flux de production actuel et des données environnementales, si l'environnement actuel remplit l'exigence de collecte d'environnement.

6. Procédé selon l'une quelconque des revendications 1 à 5, dans lequel le flux de production actuel comprend l'un ou plusieurs parmi :
l'étalonnage du véhicule, l'étalonnage du dispositif de détection de véhicule ou la collecte de carte de véhicule.

7. Appareil de commande de collecte de données, l'appareil étant situé à l'intérieur d'un véhicule, et dans lequel le véhicule est un véhicule autonome, l'appareil comprenant :
un module d'acquisition (501), configuré pour acquérir des données environnementales d'un environnement actuel où se situe le véhicule, dans lequel le module d'acquisition est situé dans le véhicule ;
un premier module de commande (502), configuré pour amener, conformément au flux de production actuel du véhicule, un ou plusieurs dispositifs de collecte du véhicule à effectuer la collecte de données en réponse à la détermination, en fonction des données environnementales, que l'environnement actuel remplit une exigence de collecte d'environnement, dans lequel un ou plusieurs dispositifs de collecte correspondent au flux de production actuel, et dans lequel le flux de production actuel est un processus de production par lequel doit passer le véhicule avant qu'il ne soit mis en service ; et
un second module de commande (503), configuré pour commander la collecte de données d'un ou de plusieurs dispositifs de collecte sur la base d'une situation de données de collecte d'un ou de plusieurs dispositifs de collecte, dans lequel le second module de commande est en outre configuré pour :
en réponse à la détermination que la situation de collecte de données d'un ou de plusieurs dispositifs de collecte remplit une condition, amener le ou les dispositifs de collecte à arrêter la collecte de données ;
dans lequel la condition comprend l'une parmi :
une première sous-condition : un premier dispositif de collecte dans un ou plusieurs dispositifs de collecte ne collectent pas les données, dans lequel le premier dispositif de collecte est un quelconque dispositif de collecte parmi un ou plusieurs dispositifs de collecte ; ou
une seconde sous-condition : les données de collecte par un second dispositif de collecte parmi un ou plusieurs dispositifs de collecte ne correspondent pas à une exigence de données du second dispositif de collecte dans le flux de production actuel, dans lequel le second dispositif de collecte est un quelconque dispositif de collecte parmi un ou plusieurs dispositifs de collecte.

8. Appareil selon la revendication 7, dans lequel le second module de commande est en outre configuré pour :
en réponse à la détermination que le premier dispositif de collecte parmi un ou plusieurs dispositifs de collecte ne collectent pas les données, acquérir un premier guide d'opération de collecte correspondant au premier dispositif de collecte ; et
amener, sur la base du premier guidage d'opération de collecte, un ou plusieurs dispositifs de collecte à poursuivre la collecte de données.

9. Appareil selon la revendication 7, dans lequel le second module de commande est en outre configuré pour :
en réponse à la détermination que les données collectées par le second dispositif de collecte dans un ou plusieurs dispositifs de collecte ne correspondent pas à l'exigence de données du second dispositif de collecte dans le flux de production actuel, acquérir un guidage d'opération de seconde collecte correspondant au second dispositif de collecte ; et
amener, en fonction du guidage d'opération de seconde collecte, un ou plusieurs dispositifs de collecte à poursuivre la collecte de données.

10. Appareil selon la revendication 9, comprenant en outre :
un module de traitement, configuré pour traiter au préalable les données collectées par le ou les dispositifs de collecte en réponse à la détermination que les données collectées par le second dispositif de collecte correspondent à l'exigence de données du second dispositif de collecte dans le flux de production actuel ; et
un module de transmission, configuré pour télécharger les données traitées au préalable dans un nuage, dans lequel les données traitées au préalable sont utilisées pour effectuer la configuration de service du véhicule dans le nuage.

11. Appareil selon l'une quelconque des revendications 7 à 10, dans lequel le module d'acquisition est en outre configuré pour acquérir des informations de configuration, et dans lequel le premier module de commande est en outre configuré pour déterminer, conformément aux informations de configuration, au flux de production actuel et aux données environnementales, si l'environnement actuel remplit l'exigence de collecte d'environnement.

12. Support d'enregistrement lisible par ordinateur stockant un programme d'ordinateur, dans lequel le programme d'ordinateur, lorsqu'il est exécuté par un processeur d'un ordinateur, amène l'ordinateur à mettre en oeuvre le procédé selon l'une quelconque des revendications 1 à 6.

13. Produit programme d'ordinateur, comprenant un programme d'ordinateur, le programme d'ordinateur, lorsqu'il est exécuté par un processeur d'un ordinateur, amène l'ordinateur à mettre en oeuvre le procédé selon l'une quelconque des revendications 1 à 6.
